# EUROPEAN PATENT APPLICATION

(11) **EP 0 766 126 A1**
(43) Date of publication of application: **02.04.1997**
(21) Application number: 96307086.7
(22) Date of filing: 27.09.1996
(51) Int. Cl.: G03B 21/60

(54) **Projection screen**

(30) Priority: 28.09.1995 JP 250899/95; 15.03.1996 JP 58884/96
(71) Applicant: Toppan Printing Co., Ltd., Taito-ku Tokyo (JP)
(72) Inventor: Shibuya, Yukiteru, Higashikatsushika-gun, Chiba-ken (JP); Oita, Masato, Kasukabe-shi, Saitame-ken (JP)
(74) Representative: Paget, Hugh Charles Edward

(57) **Abstract**

A projection screen, comprising a base (1), a light reflective layer (2) formed on the base, a polarizing layer (3) formed on the light reflective layer, and a light diffusive layer (4) formed on the polarizing layer, wherein at least one of the base, the polarizing layer and the light diffusive layer is made of nonflammable material.

## Description

The present invention relates to a projection screen, and more particularly to a projection screen having a multilayered structure including a polarizing layer and exhibiting nonflammability.

Hitherto, a projection screen has been used to observe an image projected on to the surface of the projection screen by projecting image light from an image projector, such as a motion picture projector. The projection screen of the foregoing type includes a projection screen of a type having a single-layered structure, such as a reflecting screen simply formed by a white vinyl chloride sheet and a translucent screen simply made of a mat film.

In recent years, optical characteristics, such as the image quality and the angle of the visual field, have been intended to be improved, thus resulting in projection screens, each having a multilayered structure, being widely used which are provided with a light reflective layer, a light diffusive layer, a light absorption layer, a halation preventive layer, a protective layer, a shielding layer, a reinforcing layer, a backing layer, a contamination preventive layer and surface embossment, which are selected arbitrarily.

An image projector using polarization, such as a liquid-crystal video projector is, as well known, adapted to a projection screen having a multilayered structure having a polarizing layer in order to brightly display the projected image with high contrast.

Since the projection screen of the foregoing type has the polarizing characteristic, an influence of external light made incident on the image can satisfactorily be eliminated. As a result, the image can be displayed with high contrast so as to be observed even in a well-lit room.

Since regulations have been made severer, as have been experienced with the Fire Services Act and regulation of flame retardancy, and consumers have elevated their awareness about importance of safety, the projection screen is required to have flame retardancy with which the projection screen does not make an excessively large flame to cause a fire of the building even when the projection screen catches a flame of a match, lighter, a cooking device, a stove or a cigarette.

The flame retardancy can, most easily and most reliably, be provided for the projection screen by forming all composing layers with flame retardant materials in the case where the projection screen has the multilayered structure. However, the optical characteristics of the projection screen sometimes inhibit easy obtaining of materials having both required physical properties and the flame retardancy for the composing layers.

For example, a projection screen, having the polarizing characteristic, includes a polarizing film which can be used as the polarizing layer, the polarizing film having a base which is made of inflammable resin, such as polyvinyl alcohol resin, acetyl cellulose resin or polyethylene terephthalate resin.

The polarizing film can be made to be flame retardant in terms of technique by changing the resin forming the base into flame retardant resin or by adding a flame retardant material.

However, the polarizing film is a product of a type, the manufacturing cost of which is considerably affected by the scale of manufacture in the manufacturing process. Therefore, if the polarizing films are manufactured in a small quantity for a specific purpose, the manufacturing cost will be enlarged excessively. As a result, the cost of a projection screen using the costly polarizing film cannot be reduced, thus causing the value of the projection screen as the product to be lost.

An aluminum-evaporated film has been widely used to form, the light reflective layer, the aluminum-evaporated film having characteristics superior to the conventional aluminum foil in terms of reducing the thickness, weight and cost, realizing easier operationality and having more excellent optical characteristics.

The evaporated film put into the market, similarly, has an inflammable resin film to serve as the base film, the inflammable resin film being, for example, a polyethylene terephthalate film. Also the above-mentioned evaporated film cannot easily be made to be flame retardant because the small-quantity manufacture for a specific purpose excessively raises the manufacturing cost.

Also a light reflective layer formed by coating a base film with a layer prepared by dispersing a light reflecting material in a transparent bonding material cannot easily be made to be flame retardant.

Specifically, light reflective layer, which is formed by printing, coating or transferring, causes the flatness and optical characteristics of the light reflective layer to be affected by the flatness and the heat-stability of the base film of the light reflecting layer. Therefore, it is preferable that the base film be made of an inflammable and general-purpose resin because the resin of this type enables high quality in terms of the flatness and the like to easily be realized. As a result, a special flame retardant resin cannot easily be employed.

An object of the present invention is to provide a projection screen having excellent optical characteristics and nonflammability.

More specifically, an object of the present invention is to provide a projection screen having a multilayered structure for the purpose of obtaining excellent optical characteristics and realizing flame retardancy even though the projection screen has composing layers which are made of inflammable materials.

According to one aspect of the present invention, there is provided a projection screen, comprising: a base; a light reflective layer formed on the base; a polarizing layer formed on the light reflective layer; and a light diffusive layer formed on the polarizing layer, wherein at least one of the base, the polarizing layer and the light diffusive layer is made of nonflammable material.

As a result, even when the projection screen has a structural layer made of an inflammable material, the projection screen can be made to be flame retardant.

According to another aspect of the present invention, there is provided a projection screen, comprising: a base; a light reflective layer formed on the base; a first light diffusive layer formed on the light reflective layer; a polarizing layer formed on the light reflective layer; and a second light diffusive layer formed on the polarizing layer, wherein at least one of the first light diffusive layer, the polarizing layer and the second light diffusive layer is made of nonflammable material.

Even a modified projection screen having the first and second light diffusive layers can have flame retardancy.

Preferably the sum of the thickness of the layers made of nonflammable materials is 25% or more of the total thickness of all layers, more preferably 28% or more.

As a result, the flame retardancy of the projection screen is able to conform to public disaster prevention standards. It is preferable that the light diffusive layer has a surface formed into small protrusions and pits in view of preventing capturing of external light and the light source and of diffusing light.

Preferably adhesive agent layers respectively are interposed between the base and the light reflective layer, between the light reflective layer and the polarizing layer and between the polarizing layer and the light diffusive layer, and at least one of the plural adhesive agent layers is nonflammable.

Moreover, preferably adhesive agent layers respectively are interposed between the base and the light reflective layer, between the light reflective layer and the first light diffusive layer, between the first light diffusive layer and the polarizing layer and between the polarizing layer and the second light diffusive layer, and at least one of the plural adhesive agent layers is nonflammable.

Since the projection screen according to the present invention has the structure such that at least one of the adhesive agent layers is nonflammable as described above, the flame retardancy of the projection screen can be improved.

Preferably the sum of the thickness of the adhesive agent layer to which the flame retardant agent is added and the thickness of the layer made of the flame retardant material is 25% or more of the overall thickness of the projection screen, more preferably 28% or more.

As a result, the flame retardancy of the projection screen is able to conform to public disaster prevention standards. The materials of the projection screen according to the present invention will now be described.

The nonflammable material may be polyethylene terephthalate subjected to annealing so as to have a heat resisting characteristic.

The nonflammable material may be hard polyvinyl chloride to which no plasticizer is added or semihard polyvinyl chloride to which a plasticizer is added in a content of at most 25%.

The nonflammable material may be a heat resisting material, such as carbonated acryl, aramide fiber, polyethersulfone, polyether etherketone, fluorocarbon and polyimide resin, i.e. a material which is inherently flame-resistant.

The nonflammable material may be a material in which a flame retardant agent is added to a suitable inflammable resin.

The nonflammable material may be in the form in which any one of polyethylene terephthalate subjected to annealing so as to have a heat resisting characteristic, hard polyvinyl chloride to which no plasticizer is added, semihard polyvinyl chloride to which a plasticizer is added in a content of at most 25%, carbonized acryl, aramide fiber, polyethersulfone, polyether etherketone, fluorocarbon, polyimide resin and arbitrary inflammable resin having a flame retardant material added thereto is mixed with or laminated on another material.

The nonflammable material may be in the form in which two or more materials among polyethylene terephthalate subjected to annealing so as to have a heat resisting characteristic, hard polyvinyl chloride to which no plasticizer is added, semihard polyvinyl chloride to which a plasticizer is added in a content of at most 25%, carbonized acryl, aramide fiber, polyethersulfone, polyether etherketone, fluorocarbon, polyimide resin and arbitrary inflammable resin having a flame retardant agent added thereto are mixed or laminated.

As a result of use of the foregoing materials, the projection screen according to the present invention is able to easily and reliably have excellent optical characteristics and flame retardancy.

Other optional -features and advantages of the invention will be evident from the following detailed description of the preferred embodiments described in conjunction with the attached drawings. Note that same reference numerals shown in the accompanying drawings represent the same or similar elements.

This invention can be more fully understood from the following detailed description when taken in conjunction with the accompanying drawings, in which:
FIG. 1 is a side cross sectional view showing the structure of a projection screen according to an embodiment of the present invention;
FIG. 2 is a side cross sectional view showing the structure of a modification of a base of the projection screen according to the embodiment;
FIG. 3 is a side cross sectional view showing a modification of the structure of a polarizing layer of the projection screen according to the embodiment;
FIG. 4 is a side cross sectional view schematically showing the structure of a modification of the projection screen according to the embodiment;
FIGS. 5 and 6 are side cross sectional views showing a modification of the structure of the light diffusive layer of the projection screen according to the embodiment;
FIG. 7 is a side cross sectional view showing the projection screen according to any one of Example 3 and Example 5 to 8 of the embodiment;
FIG. 8 is a side cross sectional view showing the projection screen according to any one of Examples 4 to 8 of the embodiment;
FIGS. 9 and 10 are side cross sectional views showing the structure according to any one of Examples 9 to 11 of the embodiment; and
FIGS. 11 to 14 are side cross sectional views showing the structure of Example 12 according to the embodiment.

Preferred embodiments of the present invention will now be described with reference to the drawings.

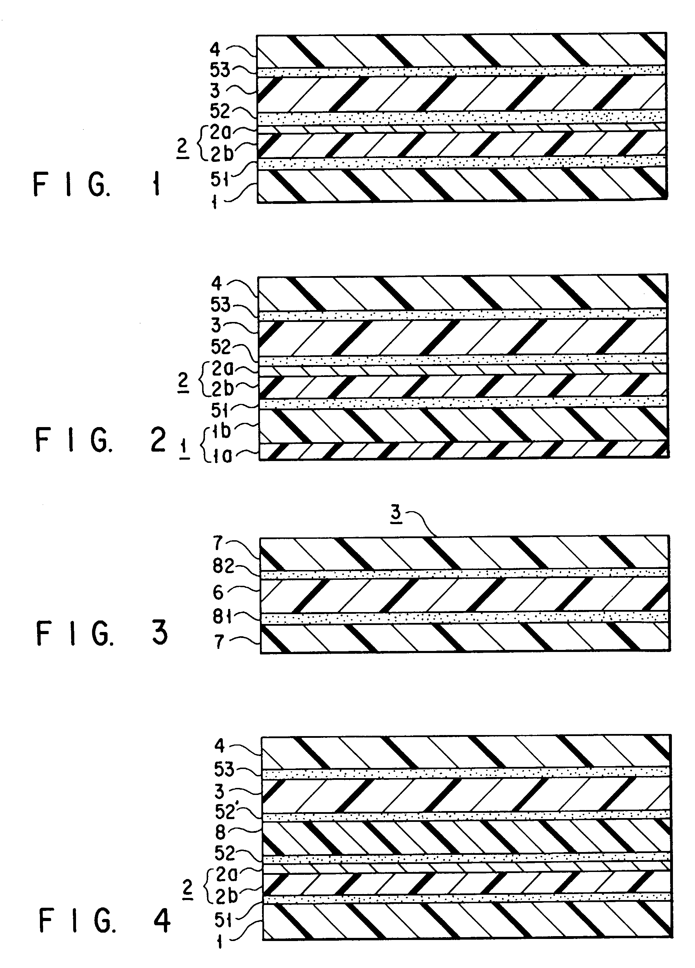

FIG. 1 is a side cross sectional view showing the structure of a projection screen according to an embodiment of the present invention.

The projection screen according to this embodiment has a light reflective layer 2 formed on a base 1 through an adhesive-agent layer 51. On the light reflective layer 2, there is formed a polarizing layer 3 through an adhesive-agent layer 52. On the polarizing layer 3, there is formed a light diffusive layer 4 through an adhesive-agent layer 53.

That is, the projection screen according to this embodiment is formed by a laminated member having a multilayered structure formed by sequentially stacking, on the base 1, the light reflective layer 2, the polarizing layer 3 and the light diffusive layer 4. The outer surface of the light diffusive layer 4 receives incident light of a projected image.

The base 1 is made of a nonflammable material. Note that the present invention is not limited to this. Any composing layer except the base 1 may be made of a inflammable material. The type of the composing layers, stacking order of the same and the like may be varied. It is preferable that the thickness of the base 1 be in a range from 10 µm to 150 µm.

Specifically, the rear surface of the base 1 is exposed to the outside, and the base 1 is made of a material having at least nonflammability. In a case where the base 1 is employed in a winding-up-type projection screen, it is preferable that a material formed into a film shape, a sheet shape or a cloth (a fiber) shape and having flexibility be employed. It is preferable that the overall thickness of the winding-up-type projection screen be 1 mm or less. If the projection screen is a reflecting type screen as is employed in the present invention, the surface characteristics of the base 1, such as the surface roughness, the transparency, color and the like may arbitrarily be determined without any limitation. For example, the surface of the base 1 may be formed into a shape having small protrusions and pits (a mat-like shape) or a flat and smooth mirror-like shape (a gloss shape).

The material of the base 1 may be metal, such as aluminum foil or a thin stainless plate; an inorganic material, such as a glass fiber, a carbon fiber, a silicon carbide fiber or a alumina fiber; and flame retardant or heat resisting synthetic resin, such as polyethylene terephthalate resin made to be heat-resistant attributable to an annealing process (resin stabilizing process in which the resin is heated to about 100°C to 160°C); hard polyvinyl chloride resin having a plasticizer added thereto; semi-hard polyvinyl chloride resin having a content of at most 25% of plasticizer added thereto; an aramide fiber; polyether sulfonic resin; polyether etherketone resin; resin containing halogen, such as fluorocarbon resin; resin containing nitrogen, such as polyimide resin; and resin containing phosphorus.

As the material of the base 1, flame retardant synthetic resin may be employed in which a flame retardant agent is added to an arbitrary inflammable synthetic resin. As the flame retardant agent, a material having excellent compatibility with the main resin and a low degree of toxicity is employed. For example, any one of the following materials may be employed: an organic flame retardant agent, such as a halogen compound flame retardant agent, a bromine compound flame retardant agent, a phosphorous compound flame retardant agent; and an inorganic flame retardant agent, such as an aluminum compound flame retardant agent, an antimony compound flame retardant agent, a magnesium compound flame retardant agent, a boron compound flame retardant agent, a zirconium compound flame retardant agent, and a molybdenum compound flame retardant agent.

Moreover, the base 1 may be made of a mixture, a copolymer, a complex or a laminate of the plurality of the foregoing flame retardant or heat resisting synthetic resin materials and the synthetic resin made to be flame retardant.

If the rear surface of the base 1 is, as shown in FIG. 2, covered with a nonflammable material la by coating or impregnation of the nonflammable material 1a, an inflammable material 1b may be employed for forming the base 1.

In a case where the other composing layers are made of the nonflammable material in place of the base 1, the above-mentioned various nonflammable materials may be employed.

The light reflective layer 2 is applied to the surface of the base 1 by bonding and has reflecting properties when employed in a reflective projection screen. Although it is preferable that the light reflective layer 2 has a diffuse reflecting properties in view of widening the angle of visual field, the light reflective layer 2 may have a mirror reflection properties in a case of this embodiment in which the light diffusive layer 4 is employed together. In a case where the projection screen is not needed to have a considerably wide angle of visual field and is observed at substantially the same position as that at which an image from a motion picture projector is projected, it is preferable that the light reflective layer 2 has retroreflective ability. It is preferable that the light reflective layer 2 has a thickness of 10 µm to 150 µm.

Specifically, the light reflective layer 2 may be formed by an evaporated film manufactured by applying, to the surface of a base film 2b, a reflecting film 2a made of a light reflecting metal foil, such as aluminum foil, a layer made by evaporating light reflecting metal, such as an evaporated aluminum layer or a layer formed by evaporating a multiplicity of dielectric material layers, the base film 2b being made of synthetic resin, such as PET.

The light reflective layer 2 may be a white coating layer in which a white pigment, such as zinc oxide, is dispersed in a transparent bonding material. Moreover, the light reflective layer 2 may be a coating layer, such as a layer formed by dispersing, in a transparent binding material, light reflecting metal powder, such as platelet formed aluminum powder, or reflecting particles of platelet formed pearl luster pigment, such as alkaline lead carbonate, lead hydrogenarsenate, bismuth oxychloride or mica titanium oxide. Note that the coating layer, such as the layer having the white coating layer or the layer in which reflecting particles are dispersed, is formed on the surface of the base film so that the light reflective layer 2 is formed.

The materials of the evaporated film, the base film of each coating layer and the binding material in the coating layer are not limited to the nonflammable material. For example, they may be made of inflammable resin, such as polypropylene resin or polyethylene terephthalate. However, it is apparently preferable that the evaporated film, the base film for each coating layer and the binding material in the coating layer be made of the nonflammable materials as exemplified as the materials of the base 1 in a view point of improving the nonflammable properties.

The polarizing layer 3 is bonded to the light reflective layer 2. The layer 3 has a polarizing axis extending parallel to the direction in which an image projected on a plane perpendicular to the axis of the incident light. Hence, the layer 3 can allows the passage of the light of the polarized image which has been projected from an projector utilizing polarization (e.g., a liquid-crystal vide projector). Moreover, the polarizing layer 3 receives external light, applied in an random direction and not polarized, and shields and removes those of the polarized components of this light which are perpendicular to its polarization axis. It is preferable that the layer 3 be 1 to 100 µm thick.

As a material of the polarizing layer 3, any one of the following material may be employed: a birefringent material, such as calcite; an electrooptical element made of, for example, lithium niobate; and a magneto-optical element made of, for example, yttrium-iron-garnet. A polarizing film having a base made of a flexible and transparent resin film and containing iodine or dichroic dye is a most preferable film because the thickness and weight can be reduced, excellent flexibility can be realized and the cost can be reduced.

Products of the polarizing film put into the market are mainly classified into polyvinyl (PVA) polarizing films and polyethylene terephthalate (PET) polarizing films.

The PVA type polarizing film is manufactured by adding, to the PVA resin, dichroic dye, such as iodine or benzidine and dianisidine dye or nitoroaminostilbene dye, and by one-way orientation. The PVA polarizing film, as shown in FIG. 3, has water resisting property by usually stacking protective film layers 7 made of transparent resin, such as cellulose acetate, on the two surfaces of a PVA layer 6 through connection layers 81 and 82 each of which is made of an adhesive agent.

On the other hand, the PET polarizing film contains the PET rein colored with the dichroic dye and is one-way-oriented so that the dye is oriented. The PET polarizing film having the single-layer structure realizes advantages, as compared with the PVA polarizing film, that the total thickness can be reduced, the heat resistance can be improved and the inflammability can somewhat be restrained. Therefore, it is more preferable that the PET polarizing film be employed to form the polarizing layer 3 as compared with the case where the PVA polarizing film is employed. It is preferable that the PET polarizing film be subjected to the similar annealing process in order to improve the nonflammability.

The light diffusive layer 4 is, by bonding, applied to the surface of the polarizing layer 3. The light diffusive layer 4 has functions of widening the angle of the visual field of the projection screen and preventing capturing external light or the light source. Thus, the light diffusive layer 4 provides a light diffusion property for the projection screen. As shown in FIG. 4, another light diffusive layer 8 may be, in addition to the light diffusive layer 4 on the surface of the projection screen, formed between the light reflective layer 2 and the polarizing layer 3. Since the light diffusive layer 8 above can be formed by a similar method to that required to form the light diffusive layer 4, the description will be performed about the light diffusive layer 4. It is preferable that the thickness of the light diffusive layer 4 be in a range from 1 µm to 100 µm.

The light diffusive layer 4 may be formed by dispersing, in the transparent binding material such as resin, a powder light diffusive agent, such as silica, alumina, kaoline, calcium carbonate, barium sulfate, titanium dioxide, or zinc oxide.

The transparent binding material for the light diffusive layer 4 may be any one of the following materials: polyethylene, polypropylene, poly-4-methylpentene-1, polyethyleneterephthalate, polybutylene terephthalate, polyethylenenaphthalate, polyarylate, polyvinyl chloride, polyvinylidene chloride, polytetrafluoroethylene, polyacrylonitrile, polymethylmethaacrylate, polystyrene, polybutadiene, polycarbonate, polysulfone, polyethersulfone, polyether etherketone, epoxy resin, melamine resin, polyurethane resin, urea resin, cellulose derivatives or silicone resin. Among the foregoing light diffusive agents and the transparent binding materials, the following materials have nonflammability: polyarylate, polyvinyl chloride, polyvinylidene chloride, polyvinyl fluoride, polyvinylidene fluoride, polytetrafluoroethylene, polysulfone, polyether sulfone, polyether etherketone, epoxy resin, melamine resin, urea resin, silicon resin. The light diffusive layer 4 has the nonflammability in a case where the light diffusive agent and/or the transparent-binding material has nonflammability.

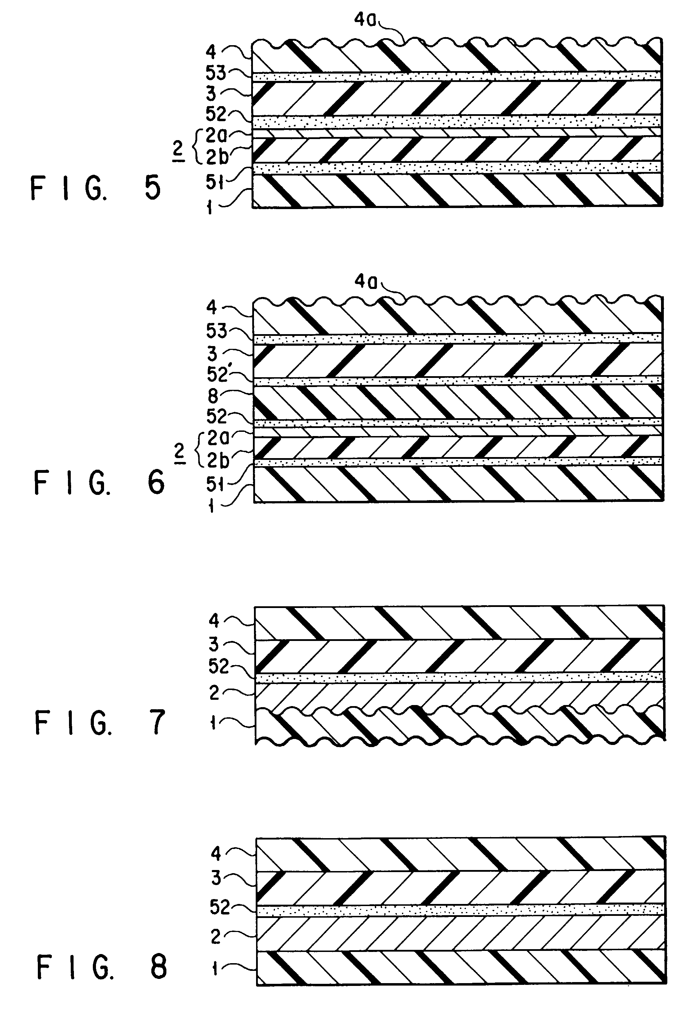

As shown in FIG. 5 or FIG. 6, a surface 4a of the transparent binding material may be matted to have small protrusions and pits by grinding or embossing in order to realize a light diffusion characteristic without use of a light diffusion material.

The light diffusive layer 4 may be formed by using a mixture, a copolymer, a complex or a laminate of the plural materials for use in the transparent binding material and the light diffusive agent.

If the sum of the thickness of the structural layers having the nonflammability is too small with respect to the overall thickness of the projection screen, the effects of restraining and preventing combustion of the other structural layers are unsatisfactory. Therefore, the projection screen cannot have a satisfactory flame retardancy. Therefore, determination of the ratio (hereinafter called a "flame retardant ratio") of the sum of the thickness of the nonflammable structural layers with respect to the overall thickness of the projection screen is an important factor for the present invention. Although the flame retardant ratio, as a result of experiments performed by the inventor of the present invention, varies depending upon the materials, the stacking order and the evaluation criteria, it is preferable that the ratio be 25% or higher, more preferably 28% or higher in a viewpoint of causing the projection screen according to the present invention to be adaptable to various fire prevention standards and flame retardancy regulations. If the flame retardant ratio is made to be 40% or higher, significant flame retardancy can be obtained with which the projection screen does not flame up even if the projection screen catches fire.

If the structural layer having nonflammability is provided for each of the two surfaces of the projection screen, that is, if both of base 1 and the light diffusive layer 4 are made of the nonflammable material, a more preferable effect can be obtained because the projection screen does not easily flame up even if flame of a lighter is allowed to approach either of the surface or the reverse surface.

The base 1, the light reflective layer 2, the polarizing layer 3 and the light diffusive layer 4 and so forth may be stacked without the adhesive-agent layers 51, 52, (52') and 53. They may directly be stacked by a coating method, a transfer method, a light adhesion method, a thermal welding method, a supersonic welding method or an electromagnetic welding method. Since the materials having the nonflammability and heat resistance, however, have poor adhesive properties, it is preferable that the structural layers 1 to 4 be stacked through the adhesive-agent layers 51, 52, (52') and 53.

Note that a major portion of various adhesive agents on the market is inflammable. The inflammable adhesive agents are easily-inflammable resin, a low molecular weight resin which is soft and which has excellent solubility and reactivity in view of obtaining permanent adhesivity and coating adaptability, resin made to be easy combustible as a result of restraint of the molecular weight and the cross-linking density after hardened in view of having flexibility after hardened, or resin in which easy combustible solvent or a reactive monomer an additive can easily be left after hardened.

Even when the thickness of each of the inflammable adhesive agents is about several to tens of µm, the adhesive agent acts as a flame passage because of considerable reactivity and combustibility. As a result, combustion of the adjacent inflammable structural layers are enhanced. As a result, a required flame retardancy cannot sometimes be obtained even if one or more structural layers made of the nonflammable material are provided.

Therefore, it is preferable that at least one of the adhesive-agent layers 51, 52, (52') and 53 be made of the nonflammable adhesive agent in view of raising the ratio of the sum of the thickness of the structural layers made of the nonflammable materials with respect to the overall thickness of the projection screen. A further preferred effect can be obtained in a case where all of the adhesive-agent layers 51, 52, (52') and 53 are made of the nonflammable adhesive agent.

The nonflammable adhesive agent may mainly comprise epoxy nonflammable resin, phenol nonflammable resin, chloroprene nonflammable resin, silicone nonflammable resin, fluorocarbon nonflammable resin, polyimide nonflammable resin or polybenzimidazole nonflammable resin. The flame retardant adhesive agent may be manufactured by using the foregoing nonflammable resin, the foregoing inorganic adhesive agent, an acrylic-, cellulose-, styrene-rubber-, nitrile-rubber-, polyester-, polyurethane-, polyamide- or vinyl-acetate-type inflammable adhesive agent as the main component thereof and by adding a flame retardant agent having excellent compatibility with the main resin and a low degree of toxity. The flame retardant agent of the foregoing type includes an organic flame retardant agent, such as a halogen compound flame retardant agent, a bromine compound flame retardant agent, a phosphorus compound flame retardant agent; and an inorganic flame retardant agent, such as an aluminum compound flame retardant agent, an antimony compound flame retardant agent, a magnesium compound flame retardant agent, a boron compound flame retardant agent, a zirconium compound flame retardant agent, and a molybdenum compound flame retardant agent.

As the foregoing flame retardant adhesive agent, a mixture, a copolymer, a complex or a laminate comprising the foregoing nonflammable resin, inorganic adhesive agent or the flame retardant adhesive agent may be employed.

The adhesive-agent layers 51, 52, (52') and 53 may be made of the same adhesive agent or different adhesive agents.

It is preferable that the adhesive agents be transparent when adapted to a reflecting type projection screen except a case where the same is employed to bond composing layers disposed more adjacent to the rear side than the light reflective layer 2.

The adhesive agents may be employed in place of the light reflective layer 2, the light diffusive layer 4, the light absorption layer and/or the shielding layer by way of dispersing the various light reflecting materials, light diffusing materials or light absorbing materials in them.

### Operation

The operation of the projection screen having the above-mentioned structure will now be described.

### Optical Characteristics

The projection screen according to the present invention receives a polarized image made incident from a liquid crystal projector (not shown) and projected thereto while being enlarged. Since the polarizing direction of the polarized image is made to be in parallel to the direction of the axis of polarization of the polarizing layer 3, the polarized image is not absorbed by the polarizing layer 3 but the same is reflected by the light diffusive layer 4 so that the polarized image is diffused by the light diffusive layer 4 so as to be clearly visually recognized by an observer. Since external non-polarized light for lighting the indoor is partly absorbed by the polarizing layer 3 and the influence of external light is, therefore, eliminated, the polarized image is able to have high contrast even in a bright room. In a case where the surface 4a of the light diffusive layer 4 has small protrusions and pits as shown in FIG. 4 or FIG. 5, light diffusion properties can be obtained in such a manner that capturing of external light and liquid crystal projector (the light source) is prevented.

### Flame Retardancy

Since the projection screen according to the present invention has the structure such that at least one (for example, the base 1) of the base 1, the polarizing layer 3 and the light diffusive layer 4 (and the light diffusive layer 8) is made of the nonflammable material, the nonflammable composing layer does not vigorously flame up even if the projection screen catches fire from lighter or the like of an operator or a spectator. Moreover, combustion heat is deprived, choking gas is generated and/or supply of oxygen required for combustion is inhibited so that combustion of the other inflammable composing layers is prevented.

Even when an inflammable composing layer, such as the polarizing film put into the market, is provided, the projection screen has flame retardancy with which generation of large flame can be prevented even when the projection screen catches flame.

Even when the inflammable material is employed to form the polarizing film and the like in order to improve the image quality and to reduce the cost, improved flame retardancy can be realized to conform to disaster prevention and flame retardant regulations, such as the disaster prevention regulation of the Japan Disaster Prevention Association, the UL (Underwriter's Laboratories) standards, the DIN (Deutsche Industrie Norm) standards.

As described above, the embodiment of the present invention is able to realize a projection screen exhibiting excellent image quality, low cost and satisfactory safety.

### Examples

Examples 1 to 12 of the projection screen according to the present invention will now be described with reference to the drawings.

### Example 1

A projection screen according to Example 1 of the present invention, as shown in FIG. 1, has a structure such that a light reflective layer 2, a polarizing layer 3 and a light diffusive layer 4 are sequentially applied on a base 1 by bonding with an adhesive agent.

The base 1 is formed by a PET film to which the flame retardant agent is added, which has been subjected to annealing and which has a thickness of 38 µm.

The light reflective layer 2 is an evaporated film which is formed by evaporating aluminum on a PET film, to which the flame retardant agent has been added, which has not been subjected to annealing and which has a thickness of 25 µm, the light reflective layer 2 having the aluminum layer having a thickness of 100Å.

The polarizing layer 3 is a PET polarizing film having a thickness of 60 µm.

The light diffusive layer 4 is a polypropylene film, to which kaoline serving as the light diffusive agent and matting material has been added and which has been biaxially oriented, the light diffusive layer 4 having a thickness of 25 µm.

A flame retardant polyester adhesive agent is used to bond the base 1 and the light reflective layer 2 to each other, the adhesive agent having the flame retardant agent added thereto and a thickness of 20 µm.

A polyester adhesive agent, to which no flame retardant agent is added and which has a thickness of 20 µm, is employed to bond the light reflective layer 2 and the polarizing layer 3 to each other and to bond the polarizing layer 3 and the light diffusive layer 4 to each other.

The projection screen according to Example 1 has a structure such that the ratio (the flame retardant ratio) of the sum of the thickness of the structural layers made of the flame retardant materials with respect to the overall thickness of the projection screen is about 28%.

The optical characteristics of the projection screen according to Example 1 were evaluated, thus resulting in excellent values being obtained such that the PSG (Peak Screen Gain) was 4.0, the angle of visual field was 30 degrees and the contrast was 10.0. As a result, a fact was confirmed that an image having a satisfactory quality can be observed even in a bright room. Moreover, the nonflammability of the projection screen according to Example 1 is able to conform to the disaster prevention regulation of the Japan Disaster Prevention Association, the UL (Underwriter's Laboratories) standards, the DIN (Deutsche Industrie Norm) standards.

### Example 2

A projection screen according to Example 2, as shown in FIG. 1, has a structure such that the base 1 according to Example 1 is changed to a PET film, to which a flame retardant agent has been added, which has been subjected to annealing and which has a thickness of 125 µm. Moreover, the adhesive-agent layer 52 for bonding the base 1 and the light reflective layer 2 to each other is changed to a polyester adhesive agent to which no flame retardant agent is added. The flame retardant ratio of the projection screen according to this example is about 42%.

The projection screen according to Example 2 has the same structure as that according to Example 1 except the base 1 and the adhesive-agent layer 52 which are changed as described above.

The projection screen according to this example exhibited optical characteristics similar to those of the projection screen according to Example 1.

The flame retardancy of the projection screen according to this example conformed to all of the foregoing three standards. Moreover, the length of blackened portion was shorter than half of that of the projection screen according to Example 1.

As described above, the projection screen according to Example 2 had the optical characteristics similar to those of the projection screen according to Example 1 and superior nonflammability to that of the projection screen according to Example 1.

### Comparative Example 1

A projection screen according to Comparative Example 1 has a structure such that the flame retardant agent added to the base 1 according to Example 1 and annealing to which the base 1 is subjected are omitted. Moreover, the flame retardant agent added to the adhesive-agent layer 52 according to Example 1 for bonding the base 1 and the light reflective layer 2 to each other is omitted. In addition, the polarizing layer 3 is, as shown in FIG. 3, changed to a triple-layered PVA polarizing film having an overall thickness of 120 µm. The projection screen according to Comparative Example 1 has a flame retardant ratio of 0%.

The projection screen according to Comparative Example 1 had substantially similar optical characteristics to those of the projection screen according to Example 1.

However, the projection screen according to Comparative Example 1 did not conform to the foregoing three standards.

### Comparative Example 2

A projection screen according to Comparative Example 2 has a structure such that the polarizing layer 3 according to Example 1 is changed to a triple-layered PVA polarizing film having an overall thickness of 120 µm. The projection screen according to Comparative Example 2 has a flame retardant ratio of about 22%.

The projection screen according to Comparative Example 2 had optical characteristics similar to those of the projection screen according to Example 1.

However, the nonflammability of the projection screen according to Comparative Example 2 did not conform to the three standards though the combustion rate was lowered as compared with that of the projection screen according to Comparative Example 1.

### Example 3

As shown in FIG. 7, a base 1 according to Example 3 is a PET sheet which has a surface 1c having small protrusions and pits (a mat shape), which has been subjected to annealing, which has the flame retardant characteristic, and the thickness of which is 25 µm to 300 µm or 200 µm to 300 µm.

The light reflective layer 2 is formed on the overall surface of the base 1 to have a thickness of 15 µm to 30 µm, the light reflective layer 2 being formed by gravure-printing silver ink having aluminum powder mixed thereto and by drying the silver ink.

On the light reflective layer 2, there is, through the adhesive-agent layer 52, laminated a polarizing layer 3 through the light permeable adhesive-agent coating layer 52 having a thickness of 15 µm or smaller.

The polarizing layer 3, as shown in FIG. 3, has a structure formed by applying protective film layers 7, which have been one-way-oriented and subjected to annealing, which are made of flame retardant PET films and each of which has a thickness of 15 µm to 20 µm, to the two surfaces of a polarizer in the form of a PVA layer 6 to which iodine has been adsorbed and which has a thickness of 25 µm to 30 µm, the protective film layers 7 being applied by bonding through connection layers 81 and 82 each of which has a thickness of 10 µm or smaller. The overall thickness of the polarizing layer 3 is 50 µm to 70 µm or larger.

On the polarizing layer 3, there is, with heat, laminated a light diffusive layer 4, the light diffusive layer 4 having light diffusive agent (fine kaoline powder) mixed thereto, subjected to two-way orientation and annealing, made of polypropylene (or PET) film, and having light transmissive and diffusion characteristics and a thickness of 15 µm to 25 µm.

The light diffusive layer 4 may be laminated on the polarizing layer 3 through a tackiness agent or an adhesive agent having a thickness of 15 µm or larger in place of laminating with heat.

Also the projection screen according to Example 3 of the present invention having the above-mentioned structure is able to obtain excellent image quality to reduce the cost and to have flame retardancy.

Also projection screens according to Examples 4 to 12 similarly attain excellent effects.

### Example 4

A projection screen according to Example 4, as shown in FIG. 8, has a structure such that the surface of the base 1 according to Example 3 is formed into a flat and smooth mirror shape.

### Example 5

A projection screen according to Example 5, as shown in FIG. 7 or FIG. 8, has a structure such that the base 1 according to Example 3 or Example 4 is made of polyethersulfone similarly having nonflammability.

### Example 6

A projection screen according to Example 6, as shown in FIG. 7 or FIG. 8, has a structure such that the base 1 according to Example 3 or Example 4 is made of carbonized acryl (LASTAN which is trade name of Asahi Kasei) similarly having nonflammability.

### Example 7

A projection screen according to Example 7, as shown in FIG. 7 or FIG. 8, has a structure such that the base 1 according to Example 3 or Example 4 is made of aramide resin (CONEX which is trade name of Teijin Limited.) also having nonflammability.

### Example 8

A projection screen according to Example 8, as shown in FIG. 7 or FIG. 8, has a structure such that the polarizing layer 3 according to any one of Examples 3 to 7 is made of a PET film, to which black dye has been mixed, which has been one-way-oriented and subjected to annealing, and which has nonflammability and a thickness of 25 µm to 120 µm or 25 µm to 35 µm.

### Example 9

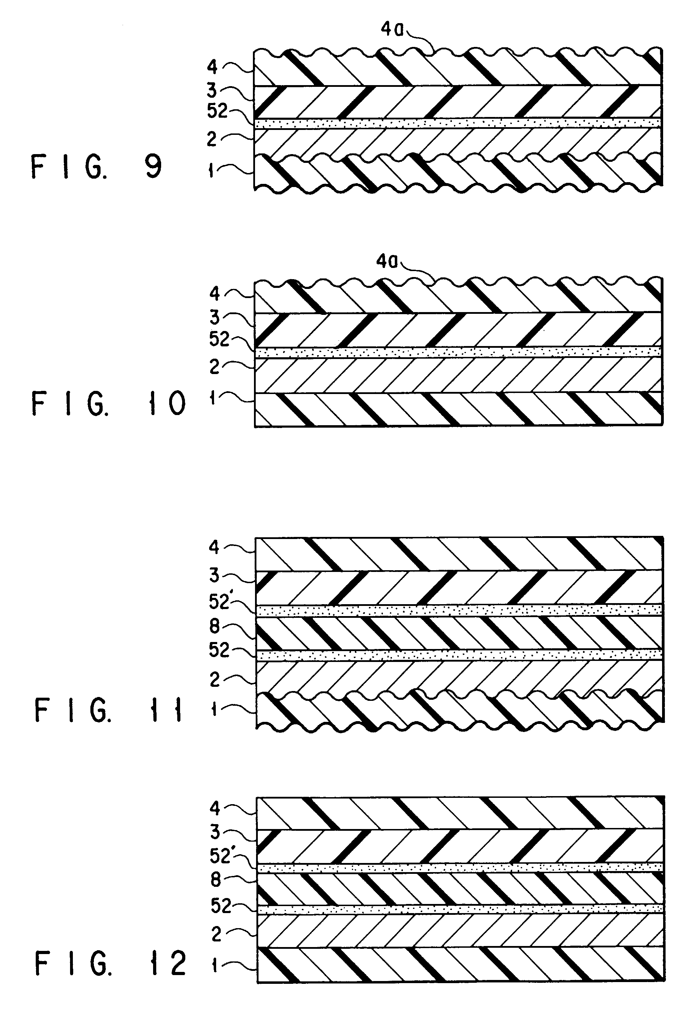

A projection screen according to Example 9, as shown in FIG. 9 or FIG. 10, has a structure such that the light diffusive layer 4 according to any one of Examples 3 to 8 is made of a polypropylene (or PET) film having a surface 4a having small protrusions and pits, subjected to two-way orientation and annealing and having flame retardancy and light transmission and diffusion characteristics. Note that the light diffusive agent may be mixed with the light diffusive layer 4 or the same may be omitted.

### Example 10

A projection screen according to Example 10, as shown in FIG. 9 or FIG. 10, has a structure such that the light diffusive layer 4 according to any one of Examples 3 to 8 is made of fluorine film having a surface 4a having small protrusions and pits, light transmission and diffusion characteristics and nonflammability. Note that the light diffusive agent may be mixed with the light diffusive layer 4 or the same may be omitted.

### Example 11

A projection screen according to Example 11, as shown in FIG. 9 or FIG. 10, has a structure such that the light diffusive layer 4 is made of hard polyvinyl chloride to which a plasticizer is added or a semihard polyvinyl chloride to which a plasticizer is added in a content of at most 25%, the light diffusive layer 4 having a surface 4a having small protrusions and pits. The hard or semihard polyvinyl chloride has light transmission and diffusion characteristics and nonflammability. Note that the light diffusive agent may be mixed with the light diffusive layer 4 or the same may be omitted.

### Example 12

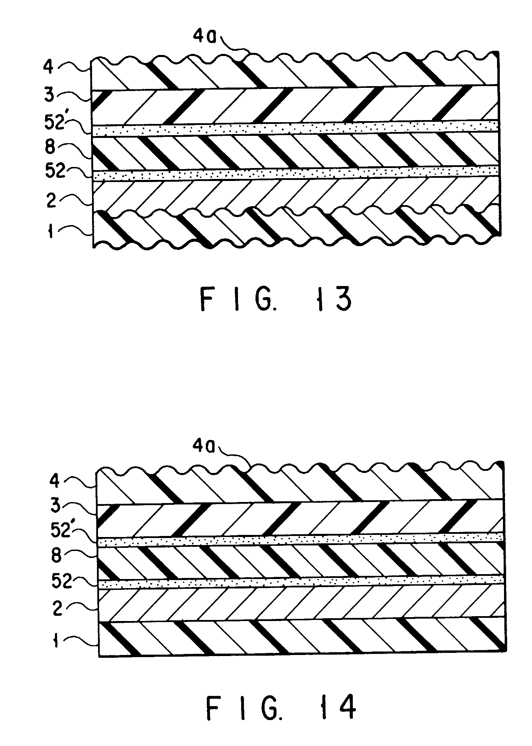

A projection screen according to Example 12, as shown in any one of FIGS. 11 to 14, has a structure such that another light diffusive layer 8 is interposed between the light reflective layer 2 and the polarizing layer 3 according to any one of Examples 3 to 11. Note that although the light diffusive layer 8 is formed similarly to the light diffusive layer 4 which is formed on the polarizing layer 3, the light diffusive layer 8 may be made of another material.

It is understood that the present disclosure of the preferred form can be changed in the details of construction and in the combination and arrangement of parts without departing from the spirit and the scope of the invention.

## Claims

1. A projection screen, comprising:
a base (1);
a light reflective layer (2) formed on said base;
a polarizing layer (3) formed on said light reflective layer; and
a light diffusive layer (4) formed on said polarizing layer, wherein:
at least one of said base, said polarizing layer and said light diffusive layer is made of nonflammable material.

2. A projection screen, comprising:
a base (1);
a light reflective layer (2) formed on said base;
a first light diffusive layer (8) formed on said light reflective layer;
a polarizing layer (3) formed on said light reflective layer; and
a second layer diffusive layer (4) formed on said polarizing layer, wherein:
at least one of said base, said first light diffusive layer, said polarizing layer and said second light diffusive layer is made of nonflammable material.

3. A projection screen according to claim 1 or 2, wherein:
the sum of the thickness of the layers made of nonflammable materials is 25% or more of the total thickness of all layers.

4. A projection screen according to claim 1 or 2, wherein:
the sum of the thickness of the layers made of nonflammable materials is 28% or more of the total thickness of all layers.

5. A projection screen according to any one of claims 1 to 4, wherein:
said light diffusive layer (4) has small protrusions and pits.

6. A projection screen according to claim 1 or 3, wherein:
adhesive agent layers (51, 52, 53) respectively are interposed between said base (1) and said light reflective layer (2), between said light reflective layer and said polarizing layer (3) and between said polarizing layer and said light diffusive layer (4), and at least one of said plural adhesive agent layers is nonflammable.

7. A projection screen according to claim 2, wherein:
adhesive agent layers (51, 52, 52', 53) respectively are interposed between said base (1) and said light reflective layer (2), between said light reflective layer and said first light diffusive layer (8), between said first light diffusive layer and said polarizing layer (3) and between said polarizing layer and said second light diffusive layer (4), and at least one of said plural adhesive agent layers is nonflammable.

8. A projection screen according to any one of claims 1 to 7, wherein:
said nonflammable material is any one of polyethylene terephthalate subjected to annealing so as to have a heat resisting characteristic, hard polyvinyl chloride to which no plasticizer is added, semihard polyvinyl chloride to which a plasticizer is added in a content of at most 25%, carbonized acryl, aramide fiber, polyethersulfone, polyether etherketone, fluorocarbon, polyimide resin and resin having a flame retardant agent added thereto.

9. A projection screen according to any one of claims 1 to 7, wherein:
said nonflammable material is in the form in which any one of polyethylene terephthalate subjected to annealing so as to have a heat resisting characteristic, hard polyvinyl chloride to which no plasticizer is added, semihard polyvinyl chloride to which a plasticizer is added in a content of at most 25%, carbonized acryl, aramide fiber, polyethersulfone, polyether etherketone, fluorocarbon, polyimide resin and resin having a flame retardant agent added thereto is mixed with or laminated on another material.

10. A projection screen according to any one of claims 1 to 7, wherein:
said nonflammable material is in the form in which two or more materials among polyethylene terephthalate subjected to annealing so as to have a heat resisting characteristic, hard polyvinyl chloride to which no plasticizer is added, semihard polyvinyl chloride to which a plasticizer is added in a content of at most 25%, carbonized acryl, aramide fiber, polyethersulfone, polyether etherketone, fluorocarbon, polyimide resin and resin having a flame retardant agent added thereto are mixed or laminated.
